# EUROPÄISCHE PATENTSCHRIFT

(11) **EP 2 336 090 B1**
(45) Veröffentlichungstag und Bekanntmachung des Hinweises auf die Patenterteilung: **17.04.2013**
(21) Anmeldenummer: 10190530.5
(22) Anmeldetag: 09.11.2010
(51) Int. Cl.: C02F 1/467, C02F 1/461

(54) **Flüssigkeitsspendegerät**
Liquid dispensing device
Appareil de distribution de liquide

(30) Priorität: 09.11.2009 DE 102009052273
(43) Veröffentlichungstag der Anmeldung: 22.06.2011
(73) Patentinhaber: Aqora GmbH, 91301 Forchheim (DE)
(72) Erfinder: Braun, Karl-Heinz, 91301 Forchheim (DE)
(74) Vertreter: Ehnis, Tobias

(56) Entgegenhaltungen:
- JP-A- 61 097 093
- US-A- 1 996 799

## Beschreibung

Die Erfindung betrifft ein Flüssigkeitsspendegerät mit einer Spendearmatur für die Abgabe von Flüssigkeit. Die Spendearmatur weist dabei eine einen Spendekanal aufweisende Spendeleitung auf, die in einem Auslaufhahn mit endseitiger Auslauföffnung endet, wobei der Auslaufhahn mit einer Entkeimungseinrichtung zur Vermeidung einer Rückverkeimung versehen ist.

In Büros, Arztpraxen, Kliniken, Unternehmen und Behörden haben Flüssigkeitsspendegeräte eine große Verbreitung gefunden. Sie weisen ein meist säulenförmiges Gehäuse mit einer Spendearmatur auf der Vorderseite auf, mittels der Trinkflüssigkeit portionsweise in Becher oder Tassen abgezapft werden kann. Als Zulaufflüssigkeit kommt insbesondere Wasser in Frage, und zwar entweder Leitungswasser, wenn das Flüssigkeitsspendegerät an das Wasserleitungsnetz angeschlossen ist, oder in Behältern (Gallonen) angeliefertes Wasser, die auf das Flüssigkeitsspendegerät mit dem Ausfluss nach unten aufgesetzt sind.

Einige Flüssigkeitsspendegeräte weisen eine Kühleinrichtung auf, mit der Zulaufflüssigkeit erheblich abgekühlt werden kann. Über eine entsprechende Spendearmatur kann dann wahlweise ungekühlte oder gekühlte Trinkflüssigkeit abgezapft werden.

Die Kühleinrichtung kann zusätzlich mit einem sogenannten Karbonator kombiniert sein, in dem das gekühlte Zulaufwasser mit Kohlensäure (CO₂,) versetzt werden kann. Durch entsprechende Leitungen und eine daran angepasste Spendearmatur können dann wahlweise Trinkflüssigkeit mit Umgebungstemperatur sowie gekühlte Trinkflüssigkeit mit und ohne Kohlensäure gezapft werden. Beispiele für Flüssigkeitsspendegeräte der vorgenannten Art sind der FR 2.155.124 A1, DE 60 2005 002 823 T2, EP 0 581 491 B1, US 4,764,315 A, US 4,940,164 A und US 5,474,717 A zu entnehmen.

Ein großes Problem bei solchen Flüssigkeitsspendegeräten ist die Anfälligkeit gegenüber Keimbildung in den flüssigkeitsführenden Leitungen und, sofern vorhanden, Behältern des Flüssigkeitsspendegerätes. Diese Neigung zur Verkeimung - meist auch begleitet durch die Ausbildung von Biofilmen an Behälter- und Leitungswandungen - ist bei solchen Geräten besonders ausgeprägt, weil sie häufig längere Zeit unbenutzt sind, beispielsweise in der Nacht und am Wochenende, und weil sie von vielen verschiedenen Personen genutzt werden. Ursache der Keimbildung kann das Wachstum von über die Spendearmatur eingedrungenen Keimen, die sogenannte Rückverkeimung, sein.

Soweit es den Bereich der flüssigkeitsführenden Teile bis zu den Spendeventilen an der Spendearmatur betrifft, ist es bekannt, der Verkeimungsneigung durch Anordnung einer Entkeimungseinrichtung auf galvanischer Basis entgegenzuwirken, indem innerhalb eines Flüssigkeitstanks mit Gleichstrom beaufschlagte Elektroden vorgesehen werden (vgl. JP 1020020037667 A, JP 61283391 A, JP 2003181471 A und DE 20 2004 010 572 U1). Diese Entkeimungseinrichtungen sind aufwendig und vermeiden gleichwohl nicht die Rückverkeimung, die durch den Eintritt von Keimen über die Auslauföffnung des Auslaufhahns erfolgt, beispielsweise durch Berührung des Auslaufhahns oder durch Anhusten.

Zur Vermeidung der Rückverkeimung ist in der EP 1 082 267 B1 vorgeschlagen, das Wasser in dem Rohrleistungssystem einschließlich der Spendearmatur mittels einer Gasspülung zu entleeren und dann mittels einer Heizeinrichtung und/oder einer Bestrahlung mittels UV-Strahlen oder anderen Strahlen zu desinfizieren. Ein ähnlicher Vorschlag ist in der DE 10 2007 055 449 A1 enthalten. Bei der darin offenbarten Spendearmatur ist im Bereich der Auslauföffnung des Auslaufhahns eine UV-C-Strahlungsquelle angeordnet, die die Rückverkeimung verhindern soll.

In der US 5,002,204 A ist ein Flüssigkeitsspendegerät offenbart, bei dem die Spendearmatur eine Spendeleitung mit Spendekanal aufweist, in dem ein Spendeventil angeordnet ist. Die Spendeleitung endet nach dem Spendeventil in einem zunächst schräg abwärts und dann senkrecht verlaufenden Auslaufhahn. Im oberen Bereich des senkrechten Teils des Auslaufhahns, bei anderen Ausführungsformen auch weiter unten, sind Elektroden für eine galvanische Sterilisierung vorgesehen. Dabei sind jeweils Anode und Kathode eines Paars von Elektroden quer zur Durchflussrichtung nebeneinander angeordnet.

Aufgrund des Verlaufs des Spendekanals in dem Auslaufhahn fließt das Wasser nach einem Spendevorgang nach unten über die Auslauföffnung ab (Spalte 5, Zeilen 25 ff der US 5,002,204 A). Die Elektroden sind dann nicht mehr benetzt, und der elektrische Strom ist unterbrochen mit der Folge, dass keine galvanische Sterilisierung mehr stattfindet. Sie beginnt erst wieder mit einem neuen Spendevorgang durch Füllen des Spendekanals im Auslaufhahn. Die galvanische Sterilisierung ist deshalb in dieser Spendearmatur im Wesentlichen auf einen Zeitraum beschränkt, der von dem Spendevorgang selbst und von dem anschließenden Leerlaufen des Auslaufhahns eingenommen wird. Ein zuverlässiger Schutz gegen Rückverkeimung ist hierdurch nicht gesichert.

Aus der DE 692 10 663 T2 ist eine Wasserreinigungsvorrichtung mit einem der Wasserreinigung dienenden Wasserreinigungsvorrichtungs-Hauptkörper mit einem Wassereinlass, einer in Verbindung mit dem Wassereinlass angeordneten Filtereinheit, einem stromab der Filtereinheit angeordneten Auslass und einer ersten Elektrodeneinheit zum Leiten von elektrischem Strom durch das in der Filtereinheit befindliche Wasser bekannt. Weiterhin ist ein Wasserhahn zum Abgeben des mittels des Wasserreinigungsvorrichtungs-Hauptkörpers gereinigten Wassers mit einem stromab des Auslasses angeordneten Wasserhahn-Hauptkörper, einem stromab des Wasserhahn-Hauptkörpers angeordneten Wasserdurchgang und einer zweiten Elektrodeneinheit zum Leiten von elektrischem Strom durch das im Wasserdurchgang befindliche Wasser sowie eine Stromversorgungseinheit zum Zuspeisen von elektrischem Strom zu den ersten und zweiten Elektrodeneinheiten vorgesehen.

Die Funktion der Wasserreinigungsvorrichtung besteht darin, das durchlaufende Wasser zu reinigen. Die ersten und zweiten Elektrodeneinheiten verhindern eine Vermehrung von Mikroben in dem Wasser, dem das Rest-Chlor durch das Filter entzogen worden ist. Nach Beendigung einer Wasserentnahme bleibt Leitungswasser im Wasserreinigungsvorrichtungs-Hauptkörper und im Wasserhahn zurück. Durch die Beaufschlagung mit Gleichspannung von 1,5 V wird das zurückbleibende Wasser sterilisiert. Da hier kein keimfrei zu haltendes Wasserreservoir sondern nur durchlaufendes Leitungswasser vorhanden ist, welches vor Durchlaufen der Filtereinheit noch chlorhaltig ist, besteht nicht die Gefahr einer Rückverkeimung. Weiterhin kann die Beaufschlagung der Elektroden mit Strom nicht verhindern, dass sich Keime in der Flüssigkeit bilden, wenn diese soweit verdunstet ist, dass die Elektroden über die Flüssigkeit nicht mehr in Kontakt miteinander stehen.

Das Dokument JP 61097093 A beschreibt einen an einem Hahn angebrachten Wasserfilter. Zwei Elektroden befinden sich im Filtergehäuse und ermöglichen die Sterilisation des Filters durch elektrischen Stromfluss.

Der Erfindung liegt die Aufgabe zugrunde, ein Flüssigkeitsspendegerät der eingangs genannten Art so zu gestalten, dass eine Rückverkeimung über die Auslauföffnung des Auslaufhahns zuverlässig vermieden wird.

Diese Aufgabe wird durch die Merkmale des Anspruchs 1 gelöst, zweckmäßige Ausgestaltungen ergeben sich aus den Merkmalen der Ansprüche 2 bis 8.

Erfindungsgemäß ist ein Flüssigkeitsspendegerät mit einer Spendearmatur für die Abgabe von Flüssigkeit vorgesehen, wobei die Spendearmatur eine einen Spendekanal aufweisende Spendeleitung aufweist, die in einem ventillosen Auslaufhahn mit endseitiger Auslauföffnung endet. Dabei ist der Auslaufhahn mit einer Entkeimungseinrichtung zur Vermeidung einer Rückverkeimung versehen, die wenigstens ein Paar von jeweils aus einer Anode und einer Kathode bestehenden Elektroden aufweist, die in den Spendekanal hineinreichen oder im Spendekanal angeordnet sind und an eine Stromquelle angeschlossen sind. Dabei ist der Auslaufhahn derart gestaltet, dass bei bestimmungsgemäßer Montage der Spendearmatur nach einem Spendevorgang eine Restflüssigkeitssäule zumindest in einem Hahnabschnitt des Auslaufhahns zurückbleibt und nicht über die Auslauföffnung abfließt. Die Elektroden sind dabei im Bereich dieses Hahnabschnitts derart angeordnet, dass der sich bei Strombeaufschlagung der Elektroden an der Anode bildende Sauerstoff zumindest einen Teil der Restflüssigkeitssäule durchströmt, wobei die Spendeleitung außerhalb des Auslaufhahns mindestens ein Spendeventil aufweist, wobei eine Steuereinrichtung vorhanden ist, die mit der Entkeimungseinrichtung gekoppelt ist. Das zumindest eine Spendeventil ist elektrisch betätigbar, wobei die Steuereinrichtung derart ausgebildet ist, dass das zumindest eine Spendeventil bei Unterbrechung des Stromflusses zwischen den Elektroden um eine solche Zeit geöffnet wird, dass die Restflüssigkeitssäule im Spendekanal durch nachfließende Flüssigkeit wieder eine solche Erstreckung erhält, dass beide Elektroden benetzt sind.

Zum Grundgedanken der Erfindung gehört es zunächst, den Auslaufhahn in an sich bekannter Weise (vgl. DE 10 2007 055 449 A1, Abschnitt [0020]) so zu gestalten, dass nach einem Spendevorgang eine Restflüssigkeitssäule in einem Hahnabschnitt des Auslaufhahns stehen bleibt, also nicht über die Auslauföffnung abfließt. Auf diese Weise bleiben die Elektroden durch die Restflüssigkeitssäule stets benetzt mit der Folge, dass die galvanische Sterilisierung zwischen zwei Spendevorgängen aufrechterhalten und hierdurch ein sterilisierter Flüssigkeitspfropfen gebildet werden kann, der eine permanente Sperre für das Eindringen von Keimen darstellt. Dabei ist es wesentlich, dass der sich an der Anode bildende Sauerstoff zumindest eine gewisse Strecke der Restflüssigkeitssäule durchströmt und auf dieser Strecke für eine Desinfizierung sorgt.

Weiterhin ist es wesentlich, dass die eine Sperre für das Eindringen von Keimen darstellende Flüssigkeit auch dann vorhanden bleibt, wenn der Zeitraum zwischen zwei Spendevorgängen mehrere Stunden beträgt, wie beispielsweise über Nacht oder am Wochenende. Dann besteht die Gefahr, dass die Restflüssigkeitssäule durch Verdunstung an der der Auslauföffnung benachbarten freien Oberfläche soweit abnimmt, dass die Elektrode nahe der Auslauföffnung nicht mehr benetzt wird und deshalb kein Strom fließt. Um dies zuverlässig zu vermeiden, weist das Flüssigkeitsspendegerät die Steuereinrichtung auf, die mit der Entkeimungseinrichtung gekoppelt und derart ausgebildet ist, dass das zumindest eine Spendeventil bei Unterbrechung des Stromflusses zwischen den Elektroden um eine solche Zeit geöffnet wird, dass die Restflüssigkeitssäule im Spendekanal durch nachfließende Flüssigkeit wieder eine solche Erstreckung erhält, dass beide Elektroden benetzt sind. Anders als bei dem Flüssigkeitsspendegerät nach der US 5,002,204 A wird also hier dafür gesorgt, dass die Restflüssigkeitssäule immer eine solche Erstreckung hat, dass ständig beide Elektroden von ihr benetzt werden und die Restflüssigkeitssäule zwischen ihnen steril bleibt. Damit behält die Restflüssigkeitssäule ihre Pfropfenfunktion in Bezug auf Keime bei, so dass ein Eindringen von Keimen in einen Flüssigkeitsbehälter und in stromaufwärts der Restflüssigkeitssäule angeordnete Leitungen des Flüssigkeitsspendegeräts zuverlässig vermieden wird.

Zur Ausbildung einer Sauerstoffströmung können die beiden Elektroden in dem Hahnabschnitt des Spendekanal durchaus nebeneinander angeordnet sein, sofern durch die Gestaltung des Auslaufhahns gesichert ist, dass eine Sauerstoffströmung in einer Richtung des Spendekanals entsteht. Obwohl der die Entkeimung bewirkende Mechanismus und insbesondere die Wirkung des an der Anode entstehenden Sauerstoffs auf die Keime nicht vollständig klar ist, hat der Erfinder erkannt, dass die Anordnung der Elektroden wesentlich ist. Dabei ist die Entkeimungswirkung umso besser, je länger die Restflüssigkeitssäule ist, die vom Sauerstoff durchströmt wird.

Eine sehr zweckmäßige Ausführungsform besteht darin, die Elektroden in Auslaufrichtung des Spendekanals hintereinander anzuordnen. Dabei sollte der Auslaufhahn einen ansteigenden Leitungsabschnitt aufweisen, in dessen Bereich die Entkeimungseinrichtung mit der Kathode oberhalb der Anode angeordnet ist, und zwar vorzugsweise die Anode am unteren Ende und die Kathode am oberen Ende dieses Leitungsabschnitts. Auf diese Weise durchströmt der bei der Elektrolyse an der Anode entstehende Sauerstoff die Restflüssigkeitssäule in diesem Leitungsabschnitt. Sofern der Leitungsabschnitt zur Auslauföffnung hin ansteigend ist, setzt sich der Sauerstoff am oberen Ende der Restflüssigkeitssäule ab und bilden dort zusätzlich einen Gaspfropfen, der eine Verkeimung der freien Oberfläche der Restflüssigkeitssäule verhindert und damit einen weiteren Rückverkeimungsschutz bietet.

Die Elektroden sind zweckmäßigerweise zumindest im Bereich des Spendekanals aus Kohlenstoff, z.B. Graphit hergestellt, um das Einbringen der bei Metallelektroden entstehenden Schwermetallionen zu vermeiden.

Vorzugsweise erfolgt die Strombeaufschlagung der Elektroden mit einer Spannung von mindestens 10 V. Es hat sich gezeigt, dass die sterilisierende Wirkung der Strombeaufschlagung der Elektroden ab dieser Spannung besonders gut ist. Als günstig hatte sich erwiesen, wenn die Strombeaufschlagung der Elektroden mit einer Spannung von 10 V bis 30 V erfolgt. Bei Versuchen mit einer Restflüssigkeitssäule aus Wasser ist bei 10 V ein Strom von 2,8 mA, bei 20 V ein Strom von 6,57 mA und bei 30 V ein Strom 13,43 mA gemessen worden. Die Versuche haben gezeigt, dass bei diesen Strömen eine Verkeimung von 7,8 x 10⁶ KbE/ml nach fünf Minuten Einwirkung auf <10 KbE/ml reduziert wird (KbE = kolonienbildende Einheit; englisch: CFU = Colony Forming Unit).

Zur Aufrechterhaltung der Schutzwirkung ist es nicht erforderlich, dass die Elektroden ständig mit elektrischen Strom beaufschlagt werden. Der Strom kann auch intermitierend eingesetzt werden, wobei zu Beginn, d.h. nach einem Spendevorgang, Stromimpulse mit relativ hoher Stromstärke vorgesehen sein können, um die Schutzwirkung in möglichst kurzer Zeit aufzubauen.

Erfindungsgemäß kann das Flüssigkeitsspendegerät weiterhin eine Stromstärkebegrenzungseinrichtung aufweisen, über die die elektrische Spannung derart eingestellt wird, dass die Stromstärke einen bestimmten Wert nicht überschreitet. Die Stromstärke bleibt dann unabhängig vom elektrischen Leitwert (Widerstand) der Restflüssigkeitssäule begrenzt.

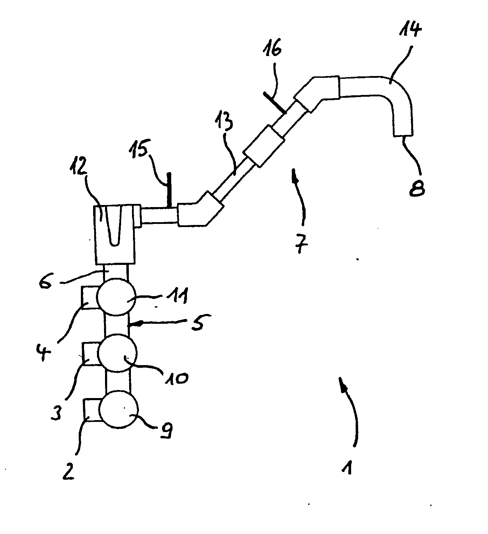

In der Zeichnung ist die Erfindung anhand eines Ausführungsbeispiels näher veranschaulicht. Sie zeigt in der Seitenansicht eine Spendearmatur 1, die Teil eines nicht näher dargestellten Wasserspendegerätes ist, bei dem über eine Zulaufleitung Zulaufwasser, beispielsweise aus dem Hauswassernetz, in das Wasserspendegerät eingeführt wird. Das Wasserspendegerät hat - wie die Wasserspendegeräte gemäß den vorzitierten Dokumenten zum Stand der Technik - eine Kühleinrichtung und eine Karbonatoreinrichtung. Die Zulaufleitung wie auch die Kühleinrichtung und die Karbonatoreinrichtung sind jeweils über Verbindungsleitungen 2, 3, 4 (nur verkürzt dargestellt) mit der Spendearmatur 1 verbunden, so dass über die Spendearmatur 1 ungekühltes stilles Wasser, gekühltes stilles Wasser und gekühltes karbonisiertes Wasser (Sprudelwasser) gezapft werden kann. An die Verbindungsleitungen 2, 3, 4 schließt sich eine Spendeleitung 5 an, bestehend aus einem unteren Ventilabschnitt 6 und einem daran anschließenden Auslaufhahn 7. Die Spendeleitung 5 durchsetzt einen Spendekanal, der in einer endseitigen Auslauföffnung 8 ins Freie mündet.

Die Verbindungsleitungen 2, 3, 4 enden jeweils in einem Magnetventil 9, 10, 11. Das untere Magnetventil 9 ist mit der Zulaufleitung des Wasserspendegerätes verbunden, so dass der Spendearmatur 1 ungekühltes (stilles) Trinkwasser zugeführt werden kann. Das mittlere Magnetventil 10 ist über die Verbindungsleitung 3 mit der Kühleinrichtung verbunden, so dass der Spendearmatur 1 gekühltes Trinkwasser zugeführt werden kann. Das obere Magnetventil 11 ist über die Verbindungsleitung 4 mit der Karbonatoreinrichtung verbunden, so dass der Spendearmatur 1 karbonisiertes Trinkwasser (Sprudelwasser) zugeführt werden kann. Der Ventilabschnitt 6 endet oberhalb der Magnetventile 9, 10, 11 in einem Kompensator 12.

Der Auslaufhahn 7 verläuft zunächst waagerecht, geht dann in einen ansteigenden Leitungsabschnitt 13 über und endet in einem nach unten gebogenen Auslaufabschnitt 14. In dem ersten Abschnitt des Auslaufhahns 7 vor dem Leitungsabschnitt 13 ragt in den Spendekanal eine Elektrode 15 hinein. Eine weitere Elektrode 16 ist im oberen Bereich des Leitungsabschnitts 13 angeordnet und ragt dort ebenfalls in den Spendekanal hinein. Die beiden Elektroden 15, 16 gehören zu einer Entkeimungseinrichtung und sind an eine Gleichstromquelle so angeschlossen, dass die Elektrode 15 eine Anode und die Elektrode 16 eine Kathode bilden.

Die Magnetventile 9, 10, 11 sind an einer hier nicht dargestellten elektrischen Steuereinrichtung des Wasserspendegerätes angeschlossen und können über ein hier nicht dargestelltes Tastenfeld auf der Außenseite des Gehäuses des Wasserspendegerätes bedient werden. Dabei kann der Benutzer durch Druck auf eine entsprechende Taste entweder das Magnetventil 9 für ungekühltes Trinkwasser, das Magnetventil 10 für gekühltes Trinkwasser oder das Magnetventil 11 für karbonisiertes Trinkwasser öffnen. Das jeweilige Trinkwasser fließt dann über den Spendekanal in den Ventilabschnitt 6 und den Auslaufhahn 7 bis zur Auslauföffnung 8 und tritt dort aus. Es kann dann mittels eines unter die Auslauföffnung 8 gestellten Bechers oder einer Tasse aufgefangen werden.

Nach Beendigung des Zapfvorgangs läuft noch etwas Trinkwasser aus dem Auslaufabschnitt 14 aus. Es verbleibt jedoch eine Restwassersäule in dem Ventilabschnitt 6 und insbesondere in dem Leitungsabschnitt 13 bis zu dem Beginn des Auslaufabschnitts 14. Die Restwassersäule zwischen den beiden Elektroden 15, 16 bildet dann ein Elektrolyth, in dem von der als Kathode dienenden Elektrode 16 ein Strom zur als Anode dienenden Elektrode 15 fließt. Durch Dissoziation des Elektrolyths entsteht an der anodischen Elektrode 15 Sauerstoff, der den Leitungsabschnitt 13 hochsteigt. Hierdurch entsteht eine stark entkeimende Wirkung in der Restwassersäule. Gleichzeitig bildet sich an der freien Oberfläche der Restwassersäule ein Gaspolster. Die Restwassersäule zwischen den beiden Elektroden 15, 16 und dieses Gaspolsters bilden einen Pfropfen gegen das Eindringen von Keimen von der Auslauföffnung 8 her.

Sollte das Wasserspendegerät längere Zeit ungenutzt bleiben, beispielsweise über Nacht oder am Wochenende, ist es möglich, dass die Restwassersäule von ihrer freien Oberfläche her so weit verdunstet, dass sie nicht mehr die kathodische Elektrode 16 benetzt. Dies führt zur Unterbrechung des Stromflusses. Um dies zu vermeiden, ist die Entkeimungseinrichtung mit der Steuereinrichtung des Wasserspendegerätes derart gekoppelt, dass bei Feststellung der Unterbrechung des Stromflusses eines der Magnetventile 9, 10, 11 so lange geöffnet wird, bis die Restflüssigkeitssäule durch Nachfließen der Trinkflüssigkeit wieder so weit aufgefüllt ist, dass sie wieder die obere Elektrode 16 benetzt. Dabei kann durch ein Verzögerungsglied vorgesehen sein, dass ein Auffüllen über die obere Elektrode 16 hinaus bis zu dem Auslaufabschnitt 14 erfolgt, damit ein Verdunstungsvolumen bereitgestellt wird, das den Stromfluss über längere Zeit sicherstellt.

## Patentansprüche

1. Flüssigkeitsspendegerät mit einer Spendearmatur (1) für die Abgabe von Flüssigkeit, wobei die Spendearmatur eine einen Spendekanal aufweisende Spendeleitung (5) aufweist, die in einem ventillosen Auslaufhahn (7) mit endseitiger Auslauföffnung (8) endet, wobei der Auslaufhahn (7) mit einer Entkeimungseinrichtung zur Vermeidung einer Rückverkeimung versehen ist, die wenigstens ein Paar von jeweils aus einer Anode und einer Kathode bestehenden Elektroden (15, 16) aufweist, die in den Spendekanal hineinreichen oder im Spendekanal angeordnet sind und an eine Stromquelle angeschlossen sind, wobei der Auslaufhahn (7) derart gestaltet ist, dass bei bestimmungsgemäßer Montage der Spendearmatur (1) nach einem Spendevorgang eine Restflüssigkeitssäule zumindest in einem Hahnabschnitt (13) des Auslaufhahns (7) zurückbleibt und nicht über die Auslauföffnung (8) abfließt, und wobei die Elektroden (15, 16) im Bereich dieses Hahnabschnitts (13) derart angeordnet sind, dass der sich bei Strombeaufschlagung der Elektroden an der Anode bildende Sauerstoff zumindest einen Teil der Restflüssigkeitssäule durchströmt, wobei die Spendeleitung (5) außerhalb des Auslaufhahns (7) mindestens ein Spendeventil (9, 10, 11) aufweist, wobei eine Steuereinrichtung vorhanden ist, die mit der Entkeimungseinrichtung gekoppelt ist, und wobei das zumindest eine Spendeventil (9, 10, 11) elektrisch betätigbar ist, wobei die Steuereinrichtung derart ausgebildet ist, dass das zumindest eine Spendeventil (9, 10, 11) bei Unterbrechung des Stromflusses zwischen den Elektroden (15, 16) um eine solche Zeit geöffnet wird, dass die Restflüssigkeitssäule im Spendekanal durch nachfließende Flüssigkeit wieder eine solche Erstreckung erhält, dass beide Elektroden (15, 16) benetzt sind.

2. Flüssigkeitsspendegerät nach Anspruch 1, wobei die Elektroden in Auslaufrichtung hintereinander angeordnet sind.

3. Flüssigkeitsspendegerät nach Anspruch 1 oder 2, wobei der Hahnabschnitt des Auslaufhahns (7) einen ansteigenden Leitungsabschnitt (13) aufweist und die Kathode (16) oberhalb der Anode (15) angeordnet ist.

4. Flüssigkeitsspendegerät nach Anspruch 3, wobei die Anode (15) im Bereich des unteren Endes und die Kathode (16) am oberen Ende des Leitungsabschnitts (13) angeordnet ist.

5. Flüssigkeitsspendegerät nach einem der Ansprüche 1 bis 4, wobei die Elektroden (15, 16) zumindest im Bereich des Spendekanals aus Kohlenstoff bestehen.

6. Flüssigkeitsspendegerät nach einem der vorhergehenden Ansprüche, wobei die Strombeaufschlagung der Elektroden mit einer Spannung von mindestens 10 V erfolgt.

7. Flüssigkeitsspendegerät nach einem der vorhergehenden Ansprüche, wobei die Strombeaufschlagung der Elektroden mit einer Spannung von 10 V bis 30 V erfolgt.

8. Flüssigkeitsspendegerät nach einem der Ansprüche 1 bis 7, wobei eine Stromstärkebegrenzungseinrichtung vorgesehen ist, über die die elektrische Spannung derart eingestellt wird, dass die Stromstärke einen bestimmten Wert nicht überschreitet.

## Claims

1. Liquid dispensing device with a dispenser fixture (1) for the dispensing of liquid, wherein the dispenser fixture has a dispenser line (5) with a dispenser channel that ends in a valve-less drain tap (7) with an end-side drain opening (8), wherein the drain tap (7) is equipped with a disinfection unit for the avoidance of a recontamination that has at least one pair of electrodes (15, 16) respectively consisting of one anode and one cathode that reach into the dispenser channel or are located in the dispenser channel and are connected to a source of current, wherein the drain tap (7) is constructed in such a way that when the dispenser fixture (1) is installed in accordance with its intended use, an excess liquid column is left back in at least one tap section (13) of the drain tap (7) after a dispensing procedure and does not slow off via the drain opening (6), and wherein the electrodes (15, 16) are situated in such a manner in the area of the tap section (13) that, when current is applied to the electrodes, the oxygen created on the anode flows through at least a part of the excess fluid column, wherein the dispenser line (5) has at least one dispenser valve (9, 10, 11) outside the drain tap (7), wherein a control unit is present that is coupled to the disinfection unit, and wherein the at least one dispenser valve (9, 10, 11) can be electrically activated, wherein the control unit is designed in such a manner that at least one dispenser valve (9, 10, 11) is opened when the current flow is interrupted between the electrodes (15, 16) for such a time that the excess liquid column in the dispenser channel receives such an extension again caused by the flowing liquid so that both electrodes (15, 16) are moistened.

2. Liquid dispensing device as defined in claim 1, wherein the electrodes are located one behind the other in the direction of drainage.

3. Liquid dispensing device as defined in claim 1 or 2, wherein the tap section of the drain tap (7) has a rising line section (13) and the cathode (16) is located above the anode (15).

4. Liquid dispensing device as defined in claim 3, wherein the anode (15) is located in the area of the lower end and the cathode (16) is located at the upper end of the line section (13).

5. Liquid dispensing device as defined in one of the claims 1 to 4, wherein the electrodes (15, 16) consist of carbon at least in the area of the dispenser channel.

6. Liquid dispensing device as defined in one of the preceding claims, wherein the application of current to the electrodes is performed with a voltage of at least 10 V.

7. Liquid dispensing device as defined in one of the preceding claims, wherein the application of current to the electrodes is performed with a voltage of 10 V to 30 V.

8. Liquid dispensing device as defined in one of the claims 1 to 7, wherein a current strength limitation unit is provided via which the electrical current is set in such a manner that the current strength does not exceed a certain value.

## Revendications

1. Distributeur de liquide avec une robinetterie de distribution (1) pour la fourniture de liquide, dans lequel la robinetterie de distribution présente une conduite de distribution (5) présentant un canal de distribution qui se termine dans un robinet de sortie (7) sans clapet avec une ouverture de sortie côté extrémité (8), dans lequel le robinet de sortie (7) est pourvu d'un dispositif de stérilisation pour éviter une recontamination qui présente au moins une paire d'électrodes (15, 16) se composant chacune d'une anode et d'une cathode qui passent dans le canal de distribution ou sont disposées dans le canal de distribution et sont raccordées à une source de courant, dans lequel le robinet de sortie (7) est configuré de telle sorte qu'en cas de montage conforme de la robinetterie de distribution (1), une colonne de liquide résiduel persiste au moins dans une section de robinet (13) du robinet de sortie (7) après un processus de distribution et ne s'écoule pas au-delà de l'ouverture de sortie (8), et dans lequel les électrodes (15, 16) sont disposées dans la région de cette section de robinet (13) de telle sorte que l'oxygène se formant sur l'anode en cas de sollicitation électrique des électrodes parcourt au moins une partie de la colonne de liquide résiduel, dans lequel la conduite de distribution (5) présente au moins un clapet de distribution (9, 10, 11) en dehors du robinet de sortie (7), dans lequel un dispositif de commande qui est raccordé au dispositif de stérilisation est présent, et dans lequel l'au moins un clapet de distribution (9, 10, 11) peut être actionné électriquement, dans lequel le dispositif de commande est réalisé de telle sorte que l'au moins un clapet de distribution (9, 10, 11) est ouvert en cas d'interruption de la circulation de courant entre les électrodes (15, 16) pendant une durée telle que la colonne de liquide résiduel dans le canal de distribution obtient de nouveau une extension par du liquide qui s'écoule ultérieurement telle que les deux électrodes (15, 16) sont mouillées.

2. Distributeur de liquide selon la revendication 1, dans lequel les électrodes sont disposées l'une derrière l'autre dans le sens de sortie.

3. Distributeur de liquide selon la revendication 1 ou 2, dans lequel la section de robinet du robinet de sortie (7) présente une section de conduite croissante (13) et la cathode (15) est disposée au-dessus de l'anode (15).

4. Distributeur de liquide selon la revendication 3, dans lequel l'anode (15) est disposée dans la région de l'extrémité inférieure et la cathode (16) sur l'extrémité supérieure de la section de conduite (13).

5. Distributeur de liquide selon l'une quelconque des revendications 1 à 4, dans lequel les électrodes (15, 16) se composent de carboné au moins dans la légion du canal de distribution.

6. Distributeur de liquide selon l'une quelconque des revendications précédentes, dans lequel la sollicitation électrique des électrodes s'effectue avec une tension d'au moins 10 V.

7. Distributeur de liquide selon l'une quelconque des revendications précédentes, dans lequel la sollicitation électrique des électrodes s'effectue avec une tension de 10 V à 30 V.

8. Distributeur de liquide selon l'une quelconque des revendications 1 à 7, dans lequel un dispositif de limitation d'intensité électrique par le biais duquel la tension électrique est réglée de tells sorte que l'intensité électrique ne dépasse pas une certaine valeur est prévu.
